# EUROPÄISCHE PATENTSCHRIFT

(11) **EP 0 770 802 B1**
(45) Veröffentlichungstag und Bekanntmachung des Hinweises auf die Patenterteilung: **12.03.2003**
(21) Anmeldenummer: 96116619.6
(22) Anmeldetag: 17.10.1996
(51) Int. Cl.: F16H 63/30, F16H 3/38

(54) **Schalteinrichtung für Kraftfahrzeug-Wechselgetriebe mit Abbremsung der Eingangswelle beim Einschalten des Rückwärtsganges**
Shift device for automotive vehicle transmission with means for braking the input shaft during selection of reverse gear
Dispositif de changement de vitesse pour une boîte de vitesses d'un véhicule automobile avec freinage de l'arbre d'entrée pendant la selection de la marche arrière

(30) Priorität: 25.10.1995 DE 19539599
(43) Veröffentlichungstag der Anmeldung: 02.05.1997
(73) Patentinhaber: Ford Global Technologies, Inc., Dearborn, Michigan 48126-2490 (US)
(72) Erfinder: Gondeck, Hans-Ulrich, 50259 Pulheim-Stommeln (DE)
(74) Vertreter: Ritzkowsky, Harald, Dipl.-Ing.

(56) Entgegenhaltungen:
- EP-A- 0 300 843
- DE-A- 2 319 297
- DE-A- 2 319 396
- DE-A- 2 319 397
- DE-A- 3 147 782
- US-A- 4 430 904
- US-A- 4 510 819
- US-A- 4 601 214

## Beschreibung

Die Erfindung bezieht sich auf eine Schalteinrichtung für Kraftfahrzeug-Wechselgetriebe mit Abbremsung der Eingangswelle beim Einschalten des Rückwärtsganges, der im Oberbegriff des Patentanschrpuches 1 erläuterten Art.

Aus der DE-AS 23 19 396, der DE-PS 23 19 397 und der DE-PS 31 47 782 sind Schalteinrichtungen für Kraftfahrzeug-Wechselgetriebe mit Abbremsung der Eingangswelle beim Einschalten des Rückwärtsganges bekannt, bei denen während einer Vorwählbewegung in die Schaltgasse des Rückwärtsganges über Teile der Schaltsperre eine Synchroneinrichtung eines Vorwärtsganges vorübergehend betätigt werden, um durch Ansynchronisieren eine Abbremsung der Eingangswelle herbeizuführen.

Aus der DE-AS 23 19 396 ist hierbei eine Schalteinrichtung bekannt, bei der an einem Teil der Schaltsperre eine Nockenfläche vorgesehen ist, die während der Vorwählbewegung für eine vorübergehende Anpressung der Synchronisiereinrichtung eines Vorwärtsganges sorgt.

Aus der DE-PS 23 19 397 ist eine Schalteinrichtung bekannt, bei der ein an der Schaltwelle angeordneter Bolzen während einer Vorwahlbewegung in die Schaltgasse des Rückwärtsganges eine Steuerkante einer Schaltgabel eines Vorwärtsganges beaufschlagt, um diese, von ihrem Schaltarm über eine federnde Verbindung abgekoppelte Schaltgabel kurzfristig zu verschieben und die Synchronisiereinrichtung eines Vorwärtsganges zum Abbremsen der Eingangswelle zu betätigen.

Aus der DE-PS 31 47 782 ist eine weitere Schalteinrichtung bekannt, bei der wieder eine Schaltgabel über eine federnde Verbindung von ihrem Schaltarm abgekoppelt ist und bei der Maßnahmen vorgesehen sind, um das vorübergehende Anpressen der Synchronisiereinrichtung eines Vorwärtsganges ohne Verhackungsprobleme zu bewerkstelligen.

Bei allen drei bekannten gattungsbildenden Schalteinrichtungen verbleibt die radial schwenkbare und axial fixierte Schaltsperre in ihrer vorgesehenen Lage im Getriebegehäuse. Die bekannten Schalteinrichtungen in Form der Nockenfläche und in Form der federnden Verbindungen zwischen einer Schaltgabel und deren Schaltarm weisen den Nachteil auf, daß sie besonders anfällig für Herstellungstoleranzen sind und daß über die Vorwählbewegung und eine Synchronisiereinrichtung die erforderliche Abbremsung der Eingangswelle nicht in der gewünschten kurzen Zeitspanne erreicht werden kann.

Die Aufgabe der Erfindung ist es, eine Schalteinrichtung für Kraftfahrzeug-Wechselgetriebe mit Abbremsung der Eingangswelle beim Einschalten des Rückwärtsganges, der im Oberbegriff des Patentanspruches 1 erläuterten Art, mit einer radial schwenkbaren und im wesentlichen axial festgelegten Schaltsperre derart auszubilden, daß nicht schon während der Vorwählbewegung in die Schaltgasse des Rückwärtsganges sondern erst während einer anfänglichen Einrückbewegung des Rückwärtsganges eine vorübergehende Betätigung von Synchronisiereinrichtungen von Vorwärtsgängen erreicht wird, wobei durch die vorübergehende Betätigung von mehreren Synchronisiereinrichtungen von Vorwärtsgängen die erforderliche Abbremsung der Eingangswelle in einer erwünschten kurzen Zeitspanne erfolgen kann.

Gemäß der Erfindung wird diese Aufgabe gelöst, indem bei einer Schalteinrichtung für Kraftfahrzeug-Wechselgetriebe mit Abbremsung der Eingangswelle beim Einschalten des Rückwärtsganges, der im Oberbegriff des Patentanspruches 1 erläuterten Art, die im Kennzeichenteil des Patentanspruches 1 aufgezeigten Merkmale angewendet werden.

Dadurch, daß die Schaltsperre mit dem Schaltfinger bzw. der Schaltwelle über eine Feder/Kugel-Raste kraftschlüssig verbunden und im Getriebegehäuse begrenzt axial beweglich ist, die Schaltsperre über eine Feder von einer im Getriebegehäuse drehfest angeordneten Schlüsselplatte mit einer Anzahl von Ausnehmungen in ihre Neutrallage belastet ist und an einem Hülsenteil mit einer Anzahl axial vorragender Stege versehen ist, die bei angewählten Rückwärtsgang mit den Ausnehmungen in der Schlüsselplatte fluchten, wird während einer anfänglichen Einrückbewegung die Schaltsperre über die Feder/Kugel-Raste mitgenommen, wobei die Stege in die mit ihnen fluchtenden Ausnehmungen der Schlüsselplatte eintreten können. Dadurch werden über die Sperrplatte der Schaltsperre die Schaltarme von Schaltgabeln für Vorwärtsgänge begrenzt mitgenommen und durch Ansynchronisieren eine Abbremsung der Eingangswelle beim Einschalten des Rückwärtsganges bewirkt, wobei nach erfolgter Ansynchronisierung die Stege der Schaltsperre gegen einen Anschlag laufen und den Kraftschluß der Feder/Kugel-Raste zur Schaltsperre lösen, wodurch diese mit ihrer Sperrplatte durch die Feder in ihre Ausgangslage zurückgeführt wird.

Bei einer Schalteinrichtung für Kraftfahrzeuge-Wechselgetriebe nach Anspruch 1, mit einem in der Schaltgasse des Rückwärtsganges angeordneten Vorwärtsgang, z.B. einem 5. Gang, wird dadurch, daß der Schaltfinger an seinem Hülsenteil einem in einer Nut im Hülsenteil der Schaltsperre einragenden Nocken aufweist sichergestellt, daß die Schaltsperre ihre Sperrfunktion beim Einrücken des 5. Ganges voll erfüllen kann.

Die Erfindung wird anhand eines in den beigefügten Zeichnungen gezeigten Ausführungsbeispieles näher erläutert. Es zeigt:
- Fig. 1: einen vertikalen Schnitt durch ein Kraftfahrzeug-Wechselgetriebe mit einer Schalteinrichtung gemäß der Erfindung in Neutralstellung;
- Fig. 2: einen vertikalen Schnitt gemäß Fig. 1, jedoch in Bremsstellung der Schalteinrichtung;

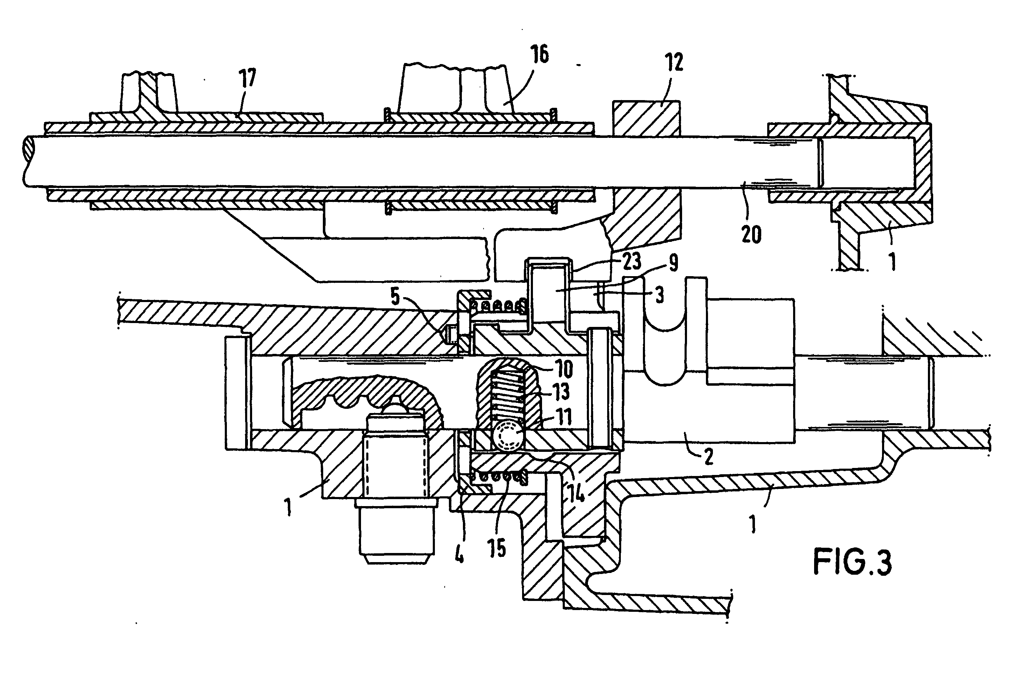

- Fig. 3: einen vertikalen Schnitt gemäß Fig. 1 bei geschaltetem Rückwärtsgang und
- Fig. 4: einen Schnitt senkrecht zur Schaltwelle mit Teilen der Schaltsperre der Schalteinrichtung.

Bei dem in den Figuren gezeigten Ausführungsbeispiel ist in einem Getriebegehäuse 1 eine Schaltwelle 2 angeordnet, die sämtliche Schaltgabeln betätigen kann. Solche sogenannten Einstangenschaltungen sind dem Fachmann an sich geläufig, es wird jedoch darauf hingewiesen, daß die Erfindung nicht nur an Einstangenschaltungen sondern auch an Schalteinrichtungen mit mehreren Schaltstangen zur Anwendung kommen kann.

An der im Getriebegehäuse 1 radial drehbaren und axial verschiebbaren Schaltwelle 2 ist eine Schaltsperre 3 angeordnet, die an sich bekannt ist und die einem auf der Schaltwelle 2 angeordneten Schaltfinger während seiner radial schwenkenden Vorwählbewegung folgt, hierbei jedoch axial fixiert ist.

Konzentrisch zur Schaltwelle 2 ist eine Schlüsselplatte 4 angeordnet, die über eine Bolzen/Loch-Verbindung 5 drehfest im Getriebegehäuse 1 festgelegt ist. Die Schlüsselplatte 4 ist hierbei mit einer Anzahl Ausnehmungen 7 versehen, die mit mit einer Anzahl von Stegen 8 übereinstimmen, die an einem am Hülsenteil der Schaltsperre 3 sich axial erstreckend angeordnet sind. In der Schaltebene 6 fluchten die Ausnehmungen 7 in der Schlüsselplatte 4 mit dem axial vorragenden Stegen 8 der Schaltsperre 3.

Der Schaltfinger 9 kann als Teil der Schaltwelle 2 oder wie gezeigt, in Form eines auf der Schaltwelle 2 festgelegten Bauteiles angeordnet sein.

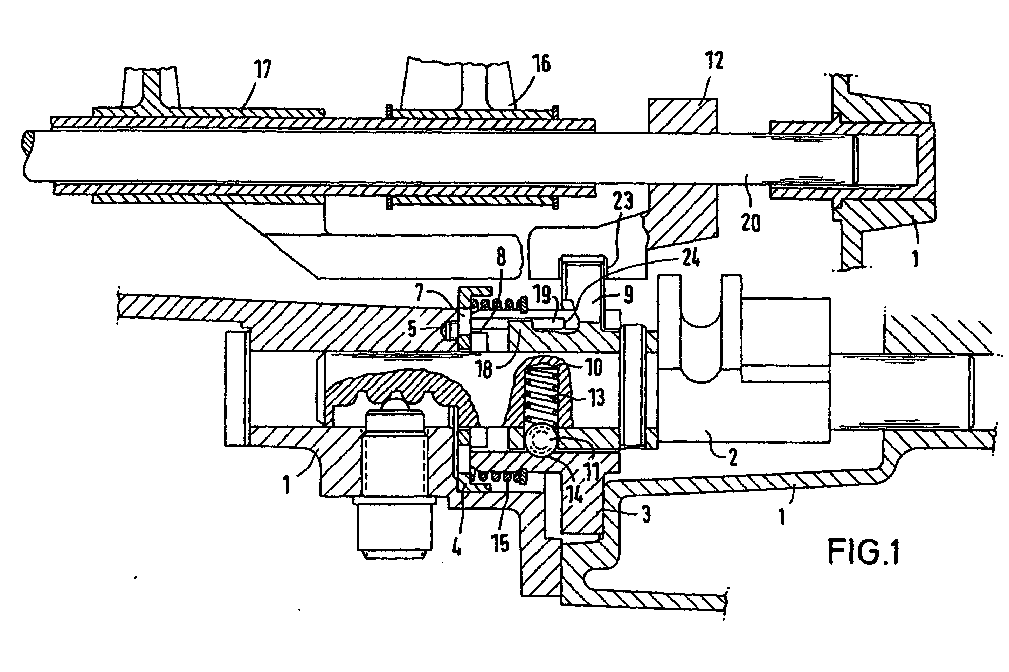

Durch einen Hülsenteil des Schaltfingers 9 und in die Schaltwelle 2 hinein erstreckt sich eine Bohrung 10, in der eine Feder 13 angeordnet ist, die eine Kugel 11 belastet, die mit einer Kugelraste 14 am Innenumfang des Hülsenteiles der Schaltsperre 3 zusammenwirkt. Die Schaltsperre 3 ist hierbei im Getriebegehäuse 1 erfindungsgemäß axial begrenzt beweglich angeordnet und wird über eine sich einerseits an der Schlüsselplatte 4 und andererseits am Hülsenteil der Sperrplatte 3 abstützende Feder 15 in Fig. 1 gesehen nach rechts in Anlage gegen die eine Seite der Aufnahme im Getriebegehäuse 1 gehalten.

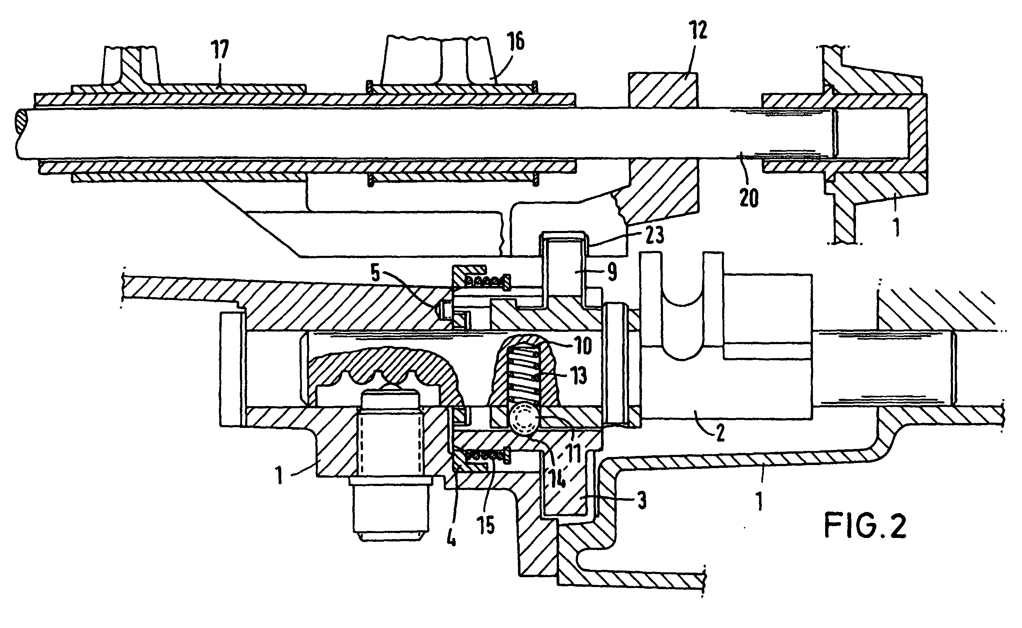

Wird die Schaltwelle 2 aus ihrer in Fig. 1 gezeigten Neutralstellung in Richtung Einrückbewegung des Rückwärtsganges in Fig. 1 gesehen nach links bewegt, wie dies in Fig. 2 gezeigt ist, so nimmt die kraftschlüssige Verbindung der Feder/Kugel-Raste 13/11-14 die Schaltsperre 3 in Fig. 2 gesehen nach links mit und die axial vorragenden Stege 8 treten in die Ausnehmungen 7 in die Schlüsselplatte 4 ein. Während dieser Bewegung wird die Sperrplatte der Schaltsperre 3 mit dem Schaltfinger 9 mit nach links bewegt, wodurch über die Sperrplatte die Schaltarme der Schaltgabeln 16 und 17 für die Vorwärtsgänge des 2. und 4. Ganges mitgenommen und ansynchronisiert werden.

Die Abbremsung der Eingangswelle des Wechselgetriebes wird somit durch Ansynchronisieren der Vorwärtsgänge, hier des 2. und 4. Ganges, eingeleitet und durch die Tatsache, daß hier zwei Synchroneinrichtungen betätigt werden, kann die Abbrem-5 sung in der erwünschten kurzen Zeitspanne erfolgen.

Der mögliche Arbeitsweg für die Abbremsung wird durch die Tiefe der Ausnehmungen 7 in der Schlüsselplatte 4 bestimmt, in die die Stege 8 der Schaltsperre 3 eindringen. Sobald die 0 axialen Stege 8 auf das hinter den Ausnehmungen 7 liegende Getriebegehäuse 1 treffen, steigt der einer axialen Bewegung der Schaltwelle 2 entgegenstehende Widerstand steil an und die kraftschlüssige Verbindung in Form der Feder/Kugel-Raste 13/11-14 wird gelöst und die axiale Mitnahmekraft in Richtung 5 Rückwärtsgang fällt steil ab. Dadurch kann die Schaltsperre 3 und die damit zusammenwirkenden Schaltgabeln 16 und 17 für die beiden Vorwärtsgänge durch die Kraft der Feder 15 in ihre neutrale Ausgangslage zurückgedrückt werden. Die Eingangswelle kann wieder frei rotieren.

Bei einer weiteren axialen Bewegung der Schaltwelle 2 wird das Schieberad des Rückwärtsganges vom Schaltfinger 9 über den Schaltarm 23 und den Mitnehmer 12 und in diesem Fall über eine Schaltstange 20 verschoben und das Schieberad des Rück-5 wärtsganges kann geräuscharm eingespurt werden.

Befindet sich in der Schaltgasse des Rückwärtsganges ein Vorwärtsgang, z.B. ein 5. Gang, so wird eine mögliche axiale Bewegung der Schaltsperre 3 beim Einlegen des Vorwärtsganges, hier des 5. Ganges, dadurch verhindert, daß ein Nocken 18 am Hülsenteil des Schaltfingers 9 in eine Nut 19 im Hülsenteil der Schaltsperre 3 eingreift und gegen einen Anschlag 24 am Ende der Nut drückt. Somit ist der Rückwärtsgang gesperrt und ein unkontrolliertes Ansynchronisieren anderer Gänge wird sicher verhindert.

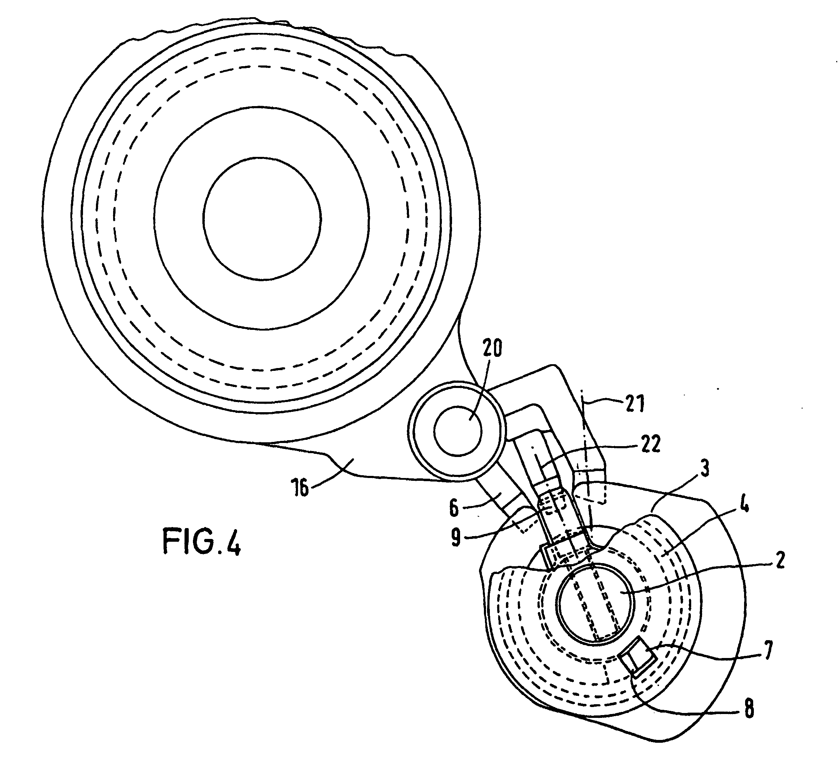

Wie aus Fig. 4 ersichtlich ist, befinden sich in der Schaltgasse bzw. Schaltebene 21 des 1. und 2. Ganges sowie in der Schaltebene 22 des 3. und 4. Ganges die Anzahl axial vorragender Stege 8 der Schaltsperre 3 neben den Ausnehmungen 7 in der Schlüsselplatte 4 und die Sperrplatte der Schaltsperre 3 wird daher durch die Anlage der Stege 8 an die Schlüsselplatte 4 axial im Getriebegehäuse 1 fixiert in ihrer Neutralstellung gehalten und damit wird die eine Doppelschaltung verhindernde Funktion der Schaltsperre 3 sicher aufrechterhalten.

## Patentansprüche

1. Schalteinrichtung für Kraftfahrzeug-Wechselgetriebe mit Abbremsung der Eingangswelle beim Einschalten des Rückwärtsganges, mit einem Rückwärtsgangschieberad, das über eine Schaltgabel in Eingriff mit zugehörenden Zahnrädern verschiebbar ist und mit einem auf einer radial drehbaren und axial verschiebbaren Schaltwelle (2) angeordneten Schaltfinger (9) der in Nuten von Schaltarmen von Schaltgabeln eingreift und wobei eine im Getriebegehäuse (1) im wesentlichen axial festgelegte Schaltsperre (3) dem Schaltfinger (9) in seiner radial schwenkenden Vorwählbewegung folgt um die nicht ausgewählten Schaltgabel zu sperren,
**dadurch gekennzeichnet, daß**
- die Schaltsperre (3) mit dem Schaltfinger (9) bzw. der Schaltwelle (2) über eine kraftschlüssige Feder/Kugel-Raste (13/11-14) verbunden und im Getriebegehäuse (1) axial begrenzt beweglich ist, die Schaltsperre (3) über eine Feder (15) von einer im Getriebegehäuse (1) drehfest angeordneten Schlüsselplatte (4) mit einer Anzahl von Ausnehmungen (7) in ihre Neutrallage belastet ist und an ihrem Hülsenteil mit einer Anzahl von axial vorragenden Stegen (8) versehen ist, die bei vorgewähltem Rückwärtsgang mit den Ausnehmungen (7) in der Schlüsselplatte (4) fluchten.

2. Schalteinrichtung für Kraftfahrzeug-Wechselgetriebe nach Anspruch 1, mit einem in der Schaltgasse bzw. Schaltebene des Rückwärtsganges angeordneten Vorwärtsgang, z.B. einem 5. Gang,
**dadurch gekennzeichnet, daß**
- der Schaltfinger (9) an seinem Hülsenteil mit einem Nocken (18) versehen ist, der in eine Nut (19) im Hülsenteil der Schaltsperre (3) einragt und durch dem einen Anschlag (24) beim Einlegen des 5. Ganges für eine Verriegelung des Rückwärtsganges durch die Schaltsperre (3) sorgt.

## Claims

1. Shift device for motor vehicle variable-speed transmissions with braking of the input shaft during the selection of the reverse gear, with a reverse-gear sliding wheel which is displaceable via a shift fork into engagement with associated gearwheels, and with a shift finger (9) which is arranged on a radially rotatable and axially displaceable shift shaft (2) and which engages into grooves of shift arms of shift forks, a shift lock (3) secured essentially axially in the transmission case (1) following the shift finger (9) in its radially pivoting preselection movement, in order to lock the non-selected shift fork,
**characterized in that**
- the shift lock (3) is connected to the shift finger (9) or the shift shaft (2) via a non-positive spring/ball catch (13/11-14) and is axially movable to a limited extent in the transmission case (1), the shift lock (3) is loaded into its neutral position via a spring (15) by a key plate (4) arranged fixedly in terms of rotation in the transmission case (1) and having a number of recesses (7) and is provided on its sleeve part with a number of axially projecting webs (8) which, with reverse gear preselected, are in alignment with the recesses (7) in the key plate (4).

2. Shift device for motor vehicle variable-speed transmissions according to Claim 1, with a forward gear, for example a 5th gear, arranged in the shift slot or shift plane of reverse gear,
**characterized in that**
- the shift finger (9) is provided on its sleeve part with a boss (18) which projects into a groove (19) in the sleeve part of the shift lock (3) and by an abutment (24) ensures, when 5th gear is selected, that reverse gear is locked by means of the shift lock (3).

## Revendications

1. Dispositif de changement de vitesse pour une boîte de vitesses d'un véhicule automobile avec freinage de l'arbre d'entrée pendant la sélection de la marche arrière, comprenant un pignon baladeur de marche arrière, qui peut être déplacé par le biais d'une fourchette de sélection en engagement avec des roues dentées associées et comprenant un doigt de sélection (9) disposé sur un arbre de sélection (2) tournant radialement et déplaçable axialement, lequel doigt s'engage dans des rainures de bras de sélection de fourchettes de sélection, et où un dispositif de verrouillage de sélection (3) essentiellement fixé axialement dans un carter de boîte de vitesses (1) suit le doigt de sélection (9) dans son déplacement de présélection pivotant radialement afin de bloquer la fourchette de sélection non sélectionnée,
**caractérisé en ce que**
- le dispositif de verrouillage de sélection (3) est connecté au doigt de sélection (9), respectivement à l'arbre de sélection (2) par le biais d'un encliquetage par force ressort/bille (13/11-14) et est déplaçable de manière limitée axialement dans le carter de la boîte de vitesses (1), le dispositif de verrouillage de sélection (3) est sollicité par le biais d'un ressort (15) par une plaque à clé (4) disposée fixe en rotation dans le carter de la boîte de vitesses (1) avec une pluralité d'évidements (7) dans sa position neutre et est pourvue, sur sa partie de manchon, d'une pluralité de nervures saillant radialement (8) qui sont en affleurement avec les évidements (7) dans la plaque à clé (4) lorsque la marche arrière est présélectionnée.

2. Dispositif de changement de vitesse pour une boîte de vitesses d'un véhicule automobile selon la revendication 1, comprenant une marche avant disposée dans la voie de sélection, respectivement dans le plan de sélection de la marche arrière, par exemple une 5e vitesse,
**caractérisé en ce que**
- le doigt de sélection (9) est pourvu, sur sa partie de manchon, d'une came (18) qui s'engrène dans une rainure (19) dans la partie de manchon du dispositif de verrouillage de sélection (3) et qui assure un verrouillage de la marche arrière par le dispositif de verrouillage de sélection (3) par le biais d'une butée (24) lors du passage de la 5e vitesse.
